# EUROPEAN PATENT APPLICATION

(11) **EP 3 666 051 A1**
(43) Date of publication of application: **17.06.2020**
(21) Application number: 19214686.8
(22) Date of filing: 10.12.2019
(51) Int. Cl.: A01C 7/08, A01B 76/00

(54) **POWER BOX FOR TRANSMISSION COMPONENTS IN LINE UNITS ON SEEDING MACHINES**

(30) Priority: 11.12.2018 BR 102018075717
(71) Applicant: Robert Bosch Limitada, 13065-900 - Campinas - SP (BR)
(72) Inventor: D ESPINDULA, GERMANO, 81200-423 Curitiba, Paraná (BR)
(74) Representative: Belloni, Giancarlo

(57) **Abstract**

The present invention aims to provide a power box for transmission components in units of lines in seeding machines, the transmission components including at least one alternator, at least one hydraulic engine, at least one belt tensioner, at least one motor pulley, at least one alternating pulley, at least one belt and at least one battery, the box comprising: a cover, one structural box, and at least one fastening element. The structural body comprises at least two side plates, a bottom plate and a crosspiece so as to form between them an upper compartment and a lower compartment; the upper compartment comprising a first width; the lower compartment comprising a second width; the first width being wider than the second width.

## Description

The present invention refers to the technological area of agricultural machines, more specifically seeding machines, those that, when coupled to an agricultural tractor, make it possible to carry out the seeding operation of crops such as beans, soybeans, corn, sorghum, wheat, oats etc., an operation that introduces seeds of plants into the soil.

The invention is precisely intended for power boxes for transmission components in seeding machines that allow to be used in a very aggressive environment and subject to bad weather, and also ensure an assembly with fewer adjustments, harmonic operation and free from misalignments.

### Description of the state of the art

As is widely known, various applications require the use of electromechanical drives, such as assemblies consisting of motors and speed reducers coupled together, for example, industrial and agricultural machines. Specifically among the agricultural machines, there are those that use speed reducing motor assemblies, these are known as seeding machines. It is important to say that, since such seeding machines work in extremely aggressive environments, their electromechanical drives are subject to climatic actions, such as high ambient temperatures, which can reach 50°C, extreme dust in suspension and rain, as well as other types of demands, such as application of directed water jets for washing, and maintenance of the drive and the seeding machine.

Furthermore, since mechanical transmissions are assemblies responsible for carrying out the transport of energy between machine elements, there is a general difficulty in defining exactly what the assembly parameters are so that the assembly functions harmoniously and free from misalignments.

Specifically with regard to transmission in seeding machines equipped with line units, three types of transmission boxes are known in the state of the art: electronic, mechanical and hydraulic. Among the three types, the most commonly used in seeding machines is the mechanical, since it receives the torque from the agricultural tractor engine and, through a hydraulic engine mounted directly on an alternator, transmits energy to a distribution box, and from the distribution box to the line units.

It should be noted that any misalignment in a transmission system generates an exponential drop in service life. In other words, the design of the fasteners needs to be thought through to prevent assembly errors or wear caused by repeatability and fatigue as much as possible.

In addition, when the project deals with a belt drive, there is another aggravating factor related to the difficulty of assembly and adjustment. This is because the belt is a flexible, hard-to-mount element that works with a high tensile stress that is dimensioned accordingly. In other words, the assembly process must engage the belt in the correct position, with the proper alignment between the pulleys and also provide a practical and easy method to tension the belt with the appropriate intensity.

In this regard, it is possible to note that there is not yet a power box for transmission components in seeding machines that can be used in a very aggressive environment and subject to bad weather, also ensuring an assembly with fewer adjustments, a harmonious operation and free from misalignments.

### Brief description of the invention

The purpose of this invention is to obtain a power box for robust transmission components, which enables its use in aggressive environments subject to bad weather and also ensures an assembly with fewer adjustments, a harmonious operation and free from misalignments.

In effect, the present invention aims to provide a power box for transmission components in units of lines in seeding machines, the transmission components including at least one alternator, at least one hydraulic engine, at least one belt tensioner, at least one motor pulley, at least one alternating pulley, at least one belt and at least one battery, the box comprising:
- a cover,
- a structural box, and
- at least one fastening element;
where the structural body comprises at least two side plates, a bottom plate and a crosspiece, so as to form an upper compartment and a lower compartment between one another; the upper compartment comprising a first width; the lower compartment comprising a second width; the first width being wider than the second width.

In agricultural machines, such as seeding machines, it is necessary to develop a robust and unique component that performs the function of unifying, fastening and adjusting all transmission-related components, e.g. the power box. Even so, the component, understood as a power box, should facilitate the maintenance and cleaning of the moving parts, in addition to aiding in the parameters of assembly prescription, so that the implementation of transmission in the seeding machine happens in the shortest time possible.

Another point to be considered is its application, since it is necessary to assemble a trio of hydraulic hoses in one of the parts coupled to the box, considering that the assembly of such hoses is carried out by the end customer, the box must facilitate the assembly of hydraulic hoses to satisfy and assist the customer in the operation of the machine.

### Brief description of the Figures

The invention is detailed below by the description of a preferred embodiment, exemplified by the Figures, in which:
- Figure 1 is a perspective view of a power box according to the present invention;
- Figure 2.1 is a perspective view of the structural box, an integral component of the energy housing in Figure 1;
- Figure 2.2 is a perspective view of the cover, an integral component of the power box in Figure 1;
- Figure 3.1 is a perspective view of some components of the power box in Figure 1;
- Figure 3.2 is a perspective view of the transmission components of the power box in Figure 1;
- Figure 4 is a perspective view of the structural box, with the components illustrated in Figures 3.1 and 3.2 associated with it.

### Detailed description of the Figures

Initially, it should be noted that the first step towards implementing a solution that would allow achieving the necessary parameters was to understand exactly which components of the transmission would need to be unified. To this end, the "generation" and distribution system called power box 100, also known as "PowerBox", should be understood.

Another point to be considered for the use of the power box 100 in seeding machines was the electrical dimensioning for 30 rated 3A and 24V motors.

This being said, it is worth mentioning that the solution created allows for the use of the hydraulic energy originated from the tractor and transforms it into electric energy by means of an alternator. This process also demands the existence of a hydraulic engine which transforms the hydraulic energy of the tractor into mechanical energy and the alternator which transforms this mechanical energy into electrical energy.

However, it is important to note that the engine and alternator speeds and working powers are different, making it necessary to use a transmission system. This system, in turn, consists of a belt, two pulleys and a tensioner.

Furthermore, in order for the production process of power box 100 to guarantee repeatability, the solution must consist of only one component, in which all the others are aggregated. This gives the assembly a robust appearance, with fewer adjustments and adjustable processes.

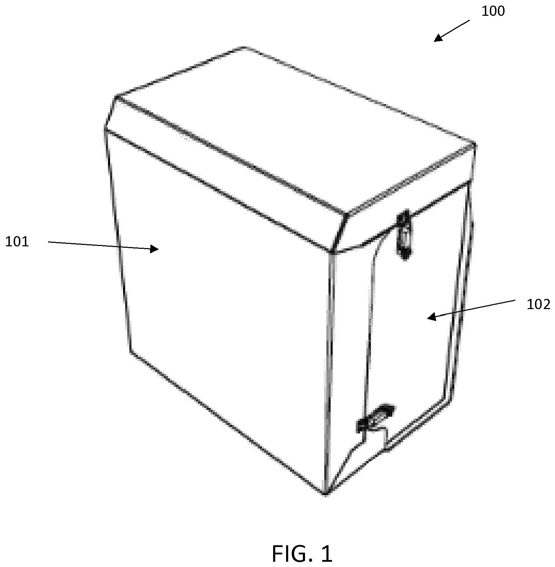

Thus, Figure 1 illustrates a version of the object of this invention, a power box 100 for use in seeding machines that are normally coupled to an agricultural tractor. This type of power box 100 makes it possible, after receiving torque from the engine of the agricultural tractor and transforming it into electrical energy, to transmit this energy to a distribution box, which in turn retransmits it to the line units.

Therefore, the power box 100 meets the need to transform mechanical energy into electrical energy and to transport it to the distribution box. In addition, the power box 100, as idealized by the present invention, allows its installation in extremely aggressive places, such as plantations, where the ambient temperature can easily reach 50°C, are still subject to extreme dust in suspension and rain, as well as other types of demands, such as the application of water jets for washing, and also maintenance of the drive and the seeding machine.

Still, through this example illustrated in Figure 1, it is possible to verify that the solution proposed by the present invention comprises initially a layer 101 and a structural box 102 which, when associated with each other, form the component identified as power box 100. The box 100 provides greater robustness to the power transmission system and also performs the function of unifying, fastening and adjusting all its components, which will be better explained in the course of this description.

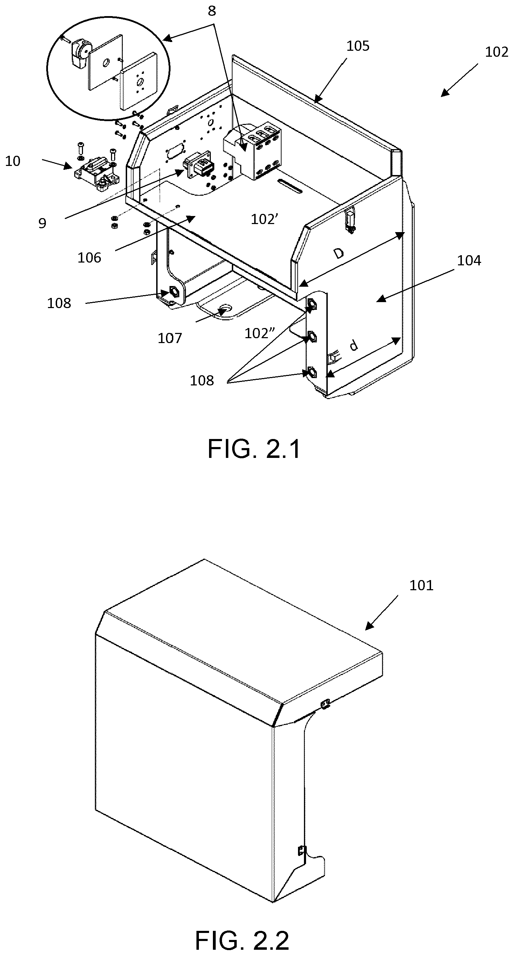

Figure 2.1 illustrates with some level of detail the structural box 2 that basically comprises at least two side plates 104, a bottom plate 105 and a crossbeam 106. The combination of at least two side plates 104 with the bottom plate 105 and the crossbeam 106 forming one upper compartment 102' and one lower compartment 102". Each of at least two side plates comprising a first width D and a second width d, the first width D being greater than the second width d.

Figure 2.1 illustrates additionally at least one switch 8, at least one connector 9, and at least one overcurrent electrical device 10. The switch 8, the connector 9 and the overcurrent electrical device 10 preferably arranged in the upper portion of one of the side plates 104, i.e. in the upper compartment 102'.

Further in relation to Figure 2.1, it illustrates optionally a first fixation hole 107, arranged in the lower portion of one of the side plates 104, i.e., in the lower compartment 102", and this first fixation hole 107 allows the association of the box 100 to the line unit in seeding machines. In addition, the lower compartment 102" also has a second mounting hole 108 that enables the association of the transmission components with the power box 102.

It should be noted that both the first fixation hole 107 and the second fixation hole 108 can be holes, slots or tears or even plates with any of these, as long as they allow their association with fixation means 110, these in turn can be screws, a screw-and-nut set, a pin, a rivet or even another element that fulfills the fixation function.

Figure 2.2 illustrates a cover 101 for power box 100, which basically serves to ensure the sealing of box 100 against solid particles, water, debris, animal contact or even human action, such as use as a support for the human body or parts of it aiming to access parts of the seeding machine that are not accessible by the ground.

In addition, as shown in Figures 1, 2.1 and 2.2, cover 101 and structural box 102 are associated with each other in order to seal the upper 102' and lower 102' compartments of power box 100.

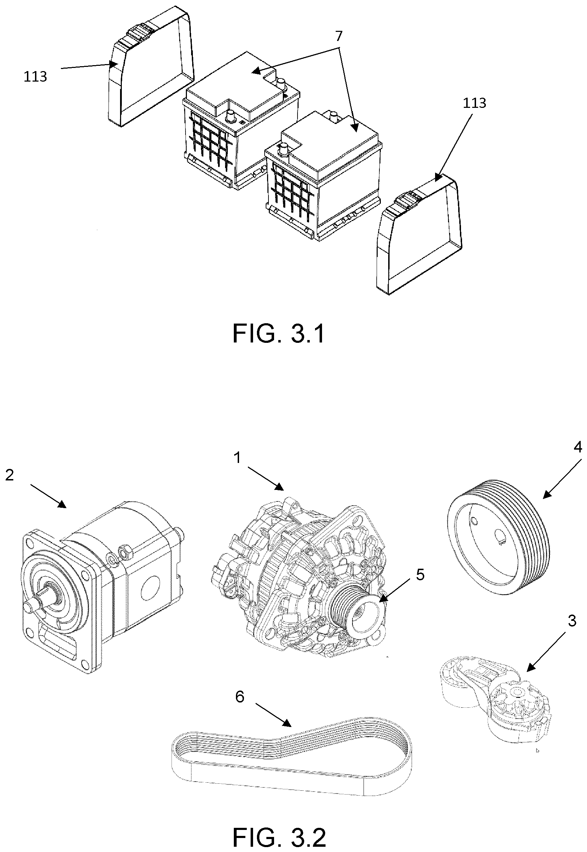

Already in Figures 3.1 and 3.2 it can be seen that the power box 100 has additionally at least one battery 7, at least one alternator 1, at least one electric motor 2, at least one tensioner 3, at least one motor pulley 4, at least one alternator pulley 5 and at least one belt 6. It is still possible to check the existence of at least one fastener 103 for use in power box 100.

Still with regard to Figures 3.1 and 3.2, it can be observed that in a preferential embodiment, the power box 100 can comprise two batteries 7 and two fastening elements 103, the latter being for the fastening of batteries 7 in the box 100.

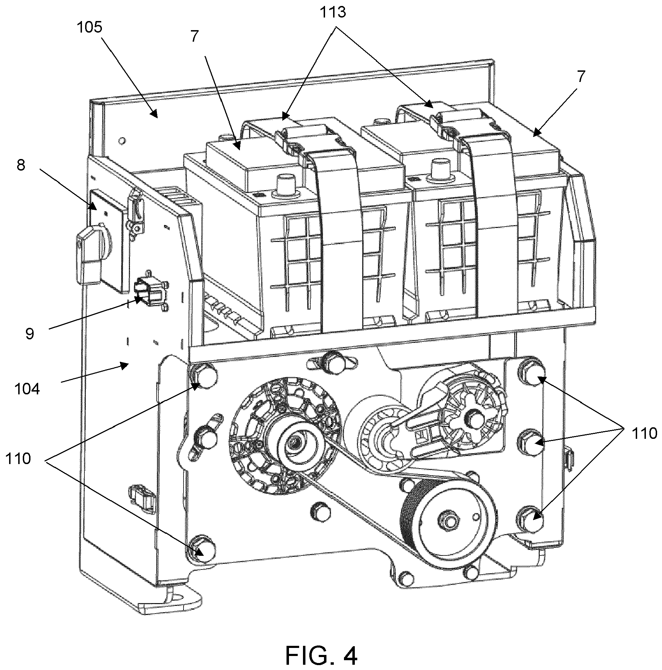

Specifically in relation to Figure 4, this Figure shows at least one battery 7 arranged in the upper compartment 102' and at least one alternator 1, at least one hydraulic engine 2, at least one belt tensioner 3, at least one belt pulley 4, at least one alternator pulley 5 and at least one belt 6, arranged in the lower compartment 102".

It should also be noted that, in a preferential embodiment of the present invention, the power box 100 comprises in its upper compartment 102', two batteries 7 associated to the crossbeam 106 by means of two fastening elements 103.

Also in relation to Figure 4, it is possible to note that in the preferential realization presented, the power box 100 has an alternator 1, a hydraulic engine 2, a belt tensioner 3, a motor pulley 4, an alternator pulley 5 and a belt 6, these associated with a transmission plate 109. The transmission plate 109 is connected to the structural box 102 through the second mounting hole 108 of the lower housing 102" and the fastening means 110.

## Claims

1. Power box (100) for transmission components in line units on seeding machines, the transmission components including at least one alternator (1), at least one hydraulic engine (2), at least one belt tensioner (3), at least one motor pulley (4), at least one alternator pulley (5), at least one belt (6) and at least one battery (7), the box (100) **characterized by** the fact of comprising:
- a cover (101),
- a structural box (102), and
- at least one fastener element (103);
the structural box (102) comprising at least two side plates (L), a bottom plate (106) and a crossbeam (107), so as to form an upper compartment (102') and a lower compartment (102') between them; the upper compartment (102') comprising a first width (D); the lower compartment (102") comprising a second width (d); the first width (D) being greater than the second width (d).

2. Box (100) according to claim 1, **characterized by** the fact that it additionally comprises at least one switch (8), at least one connector (9), and at least one circuit breaker (10).

3. Box (100) according to claim 1, **characterized by** the fact that at least one pair of batteries (7) is arranged in the upper compartment (102') and the at least one alternator (1), the at least one hydraulic engine (2), the at least one belt tensioner (3), the at least one motor pulley (4), the at least one alternator pulley (5), the at least one belt (6) are arranged in the lower compartment (102").

4. Box (100) according to claim 3, **characterized by** the fact that at the least one battery (7) is fastened to the top crossbeam (107) of the upper compartment (102'), through at least one fastener element (103).

5. Box (100) according to claim 4, **characterized by** the fact that it contains two batteries (7) fixed to the crossbeam (107) of the upper compartment (102'), through two fastening elements (103).

6. Box (100) according to any of the claims 1-5, **characterized by** the fact that the cover (101) and the structural box (102) are associated with each other, so as to seal the upper compartment (102') and the lower compartment (102").

7. Box (100) according to any of the claims 1-6, **characterized by** the fact that the lower compartment (102") has a plate (105) arranged in one of the side plates (L), in order to allow the association of the box (100) to a unit of line in seeding machines
